# EUROPEAN PATENT APPLICATION

(11) **EP 4 575 270 A1**
(43) Date of publication of application: **25.06.2025**
(21) Application number: 23874742.2
(22) Date of filing: 27.09.2023
(51) Int. Cl.: F16H 57/04, B60K 17/12

(54) **VEHICULAR DRIVE DEVICE**

(30) Priority: 07.10.2022 JP 2022162119
(71) Applicant: AISIN CORPORATION, Kariya-shi, Aichi 448-8650 (JP)
(72) Inventor: KUMIKAWA, Yuki, Kariya-shi, Aichi 448-8650 (JP); TSUGE, Motohiro, Kariya-shi, Aichi 448-8650 (JP); SUZUKI, Tomoyuki, Kariya-shi, Aichi 448-8650 (JP)
(74) Representative: Kramer Barske Schmidtchen Patentanwälte PartG mbB
(86) International application number: PCT/JP2023/035268
(87) International publication number: WO 2024/075615

(57) **Abstract**

There is disclosed a vehicular drive device including a transmission mechanism that transmits drive force from a drive source to a wheel via a shaft member, and a case that houses the transmission mechanism and at least a portion of the shaft member, in which the case includes a gear case part in which oil that is able to be scraped up by rotation of a gear of the transmission mechanism is accumulated, and a wall part that bounds at least a lower side of a space around the shaft member and extends along an extending direction of the shaft member, a space around the shaft member has one side in an extending direction of the shaft member communicating with an inside of the gear case part, and has another side in the extending direction of the shaft member including an object disposition space in which an object to be lubricated by oil is disposed, or communicating with the object disposition space, and oil scraped up by rotation of a gear of the transmission mechanism is supplied to the object to be lubricated that is in a space around the shaft member, or to the object to be lubricated via a space around the shaft member.

## Description

### TECHNICAL FIELD

The present disclosure relates to a vehicular drive device.

### BACKGROUND ART

A technique is known in which a case forming a first housing chamber that houses a rotating electrical machine and a second housing chamber that houses a transmission mechanism are provided, and oil accumulated in a lower portion of the second housing chamber is scraped up by rotation of a gear of the transmission mechanism and supplied to various bearings of the transmission mechanism.

### CITATIONS LIST

### PATENT LITERATURE

Patent Literature 1: JP 2021-112052 A

### SUMMARY OF INVENTION

### TECHNICAL PROBLEMS

However, in a conventional technique as described above, the oil scraped up by the rotation of the gear of the transmission mechanism is not utilized for lubrication or the like of an end portion of a shaft member (for example, an end portion of an intermediate shaft connected to a differential gear mechanism, the portion being on a side far from the differential gear mechanism).

Accordingly, in one aspect, the present disclosure intends to supply oil scraped up by rotation of a gear of a transmission mechanism to an end portion of a shaft member.

### SOLUTIONS TO PROBLEMS

In one aspect, there is provided a vehicular drive device including
a transmission mechanism that transmits drive force from a drive source to a wheel via a shaft member, and
a case that houses the transmission mechanism and at least a portion of the shaft member, in which
the case includes
a gear case part in which oil that is able to be scraped up by rotation of a gear of the transmission mechanism is accumulated, and
a wall part that bounds at least a lower side of a space around the shaft member and extends along an extending direction of the shaft member,
a space around the shaft member has one side in an extending direction of the shaft member communicating with an inside of the gear case part, and has another side in the extending direction of the shaft member including an object disposition space in which an object to be lubricated by oil is disposed, or communicating with the object disposition space, and
oil scraped up by rotation of a gear of the transmission mechanism is supplied to the object to be lubricated that is in a space around the shaft member, or to the object to be lubricated via a space around the shaft member.

### ADVANTAGEOUS EFFECTS OF INVENTION

In one aspect, according to the present disclosure, it is possible to supply the oil scraped up by the rotation of the gear of the transmission mechanism to an end portion of the shaft member.

### BRIEF DESCRIPTION OF DRAWINGS

FIG. 1 is a schematic top view showing a state of a vehicular drive device mounted on a vehicle.
FIG. 2 is a cross-sectional view of the vehicular drive device.
FIG. 2A is a skeleton diagram illustrating the vehicular drive device.
FIG. 3 is a side view from an A1 side, schematically showing the vehicular drive device according to the present embodiment.
FIG. 4 is a perspective view of a channel forming member.
FIG. 5 is an enlarged view of a portion Q6 in FIG. 2.
FIG. 6 is a side view from an A2 side, schematically showing the vehicular drive device according to the present embodiment.
FIG. 7 is a perspective view from an A2 side, schematically showing the vehicular drive device according to the present embodiment.

### DESCRIPTION OF EMBODIMENTS

Hereinafter, each embodiment will be described in detail with reference to the accompanying drawings. Note that dimension ratios in the drawings are merely examples and are not limited thereto, and shapes and the like in the drawings may be partially exaggerated for convenience of description.

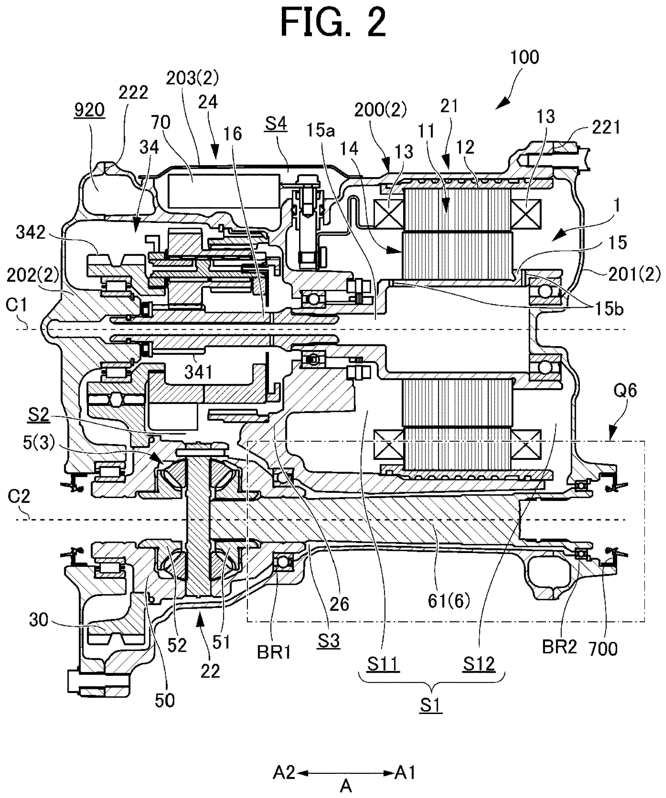

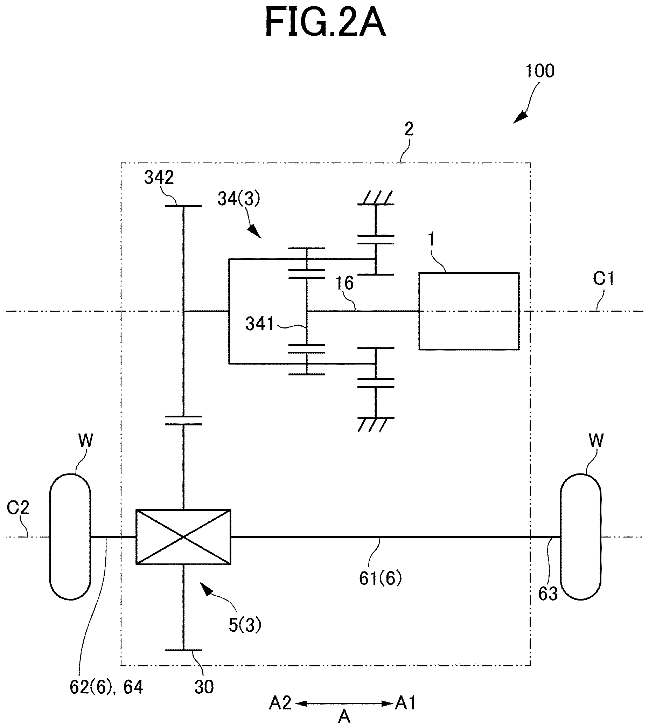

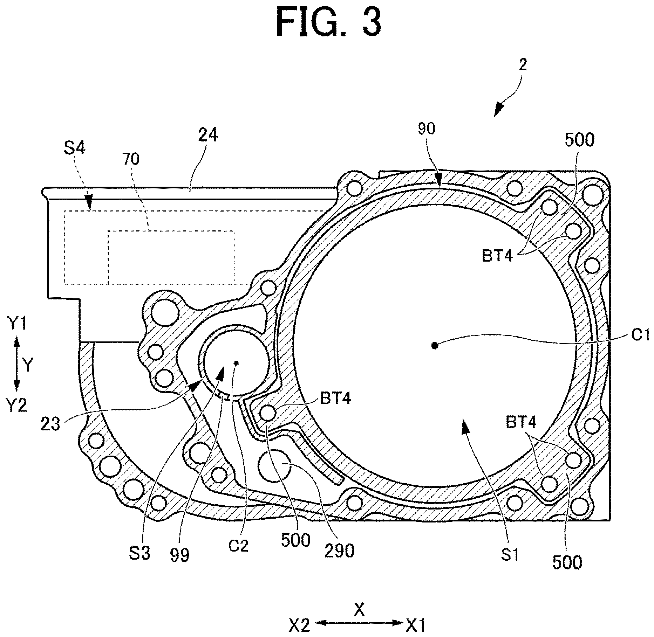

In the following description, a Y direction (refer to FIG. 3 and the like) correspond to an up-down direction in a state where a vehicular drive device 100 is in use, that is, an up-down direction with respect to an orientation in which the vehicular drive device 100 in use is disposed. Then, a Y1 side and a Y2 side correspond to an upper side and a lower side along the Y direction. Note that the up-down direction is not necessarily parallel to a vertical direction, and it is only required that a vertical direction component is predominant. Furthermore, orientations of respective members in the following description represent orientations in a state where the respective members are fitted to the vehicular drive device 100. Furthermore, terms related to dimensions, disposition orientation, disposition position, and the like of each member are concepts including a state of those having a difference due to an error (an allowable error in manufacturing). An A direction (refer to FIG. 2 and the like) corresponds to an axial direction, and an A1 side and an A2 side along the A direction are defined in FIG. 2 and the like. Furthermore, an X direction (refer to FIG. 3 and the like) is a direction orthogonal to both the A direction and the Y direction, and an X1 side and an X2 side along the X direction are defined in FIG. 3 and the like.

In the present specification, "drivingly coupled" state refers to a state in which two rotational elements are coupled so as to be able to transmit drive force (synonymous with torque), and includes a state in which the two rotational elements are coupled so as to rotate integrally, or a state in which the two rotational elements are coupled so as to be able to transmit drive force via one or two or more transmission members. Such a transmission member includes various members (for example, a shaft, a gear mechanism, a belt, a chain, and the like) that transmit rotation at the same speed or at a different speed. Note that an engagement device (for example, a friction engagement device, a meshing engagement device, or the like) that selectively transmits rotation and drive force may be included as the transmission member.

Furthermore, in the present specification, "communication" refers to a state in which two spatial elements in fluid communication with each other. That is, "communication" refers to a state in which fluid can move back and forth between the two spatial elements. In this case, the two spatial elements may communicate directly or indirectly (that is, via another spatial element).

In the present specification, the "rotating electrical machine" is used as a concept including any of a motor (electric motor), a generator (generator), and a motor-generator that functions as both the motor and the generator as necessary. Furthermore, in the present specification, with respect to arrangement of two members, "to overlap as viewed in a specific direction" means that, in a case where a virtual straight line parallel to the direction of a line of sight is moved in each direction orthogonal to the virtual straight line, a region where the virtual straight line intersects both of the two members exists in at least a part. Furthermore, in the present specification, with respect to arrangement of two members, "disposition regions in a specific direction overlap" means that at least a part of a disposition region in a specific direction of one member is included in a disposition region in a specific direction of another member.

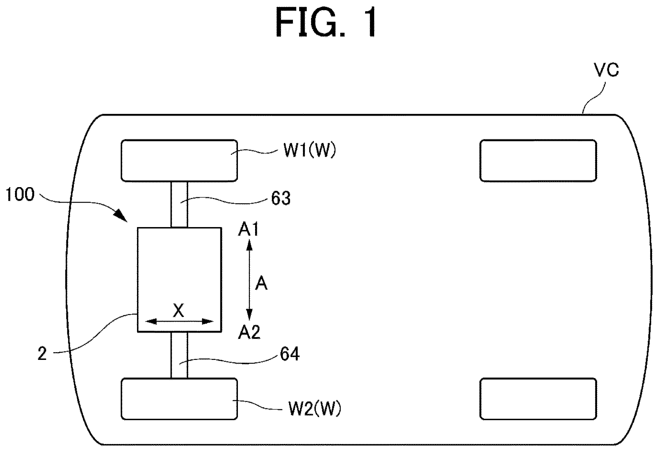

FIG. 1 is a schematic top view showing a state of the vehicular drive device 100 mounted on a vehicle VC. FIG. 2 is a cross-sectional view of the vehicular drive device 100. FIG. 2A is a skeleton diagram showing the vehicular drive device 100.

As schematically shown in FIG. 2A, the vehicular drive device 100 includes a rotating electrical machine 1, a pair of output members 6 drivingly coupled to a pair of wheels W (refer to FIG. 1), and a transmission mechanism 3 that transmits drive force between the rotating electrical machine 1 and the pair of output members 6. The vehicular drive device 100 further includes a case 2 that houses the rotating electrical machine 1. The case 2 also houses the pair of output members 6 and the transmission mechanism 3. Note that, in a modification, the case 2 may house only one (a first output member 61, for example) of the pair of output members 6. Furthermore, application of the vehicular drive device 100 is applicable to any vehicle having the rotating electrical machine 1, such as an electric vehicle or a hybrid vehicle, and is applicable to any vehicle with a drive system such as a front wheel drive or a rear wheel drive. Furthermore, a drive source may be only an engine (internal combustion engine).

A first output member 61, which is one of the pair of output members 6, is drivingly coupled to a first wheel W1, which is one of the pair of wheels W. A second output member 62, which is another one of the pair of output members 6, is drivingly coupled to a second wheel W2, which is another one of the pair of wheels W. As shown in FIG. 1, the vehicle VC on which the vehicular drive device 100 is mounted includes a first drive shaft 63 that rotates integrally with the first wheel W1 and a second drive shaft 64 that rotates integrally with the second wheel W2. The first drive shaft 63 is coupled to the first wheel W1 via, for example, a constant-velocity joint, and the second drive shaft 64 is coupled to the second wheel W2 via, for example, a constant-velocity joint. Then, the first output member 61 is coupled to the first drive shaft 63 so as to rotate integrally with the first drive shaft 63, and the second output member 62 is coupled to the second drive shaft 64 so as to rotate integrally with the second drive shaft 64. Note that the first output member 61 may be in a form of an intermediate shaft. The first output member 61 is rotatably supported with respect to the case 2 via a bearing BR1 on an axial direction A2 side, and is rotatably supported with respect to the case 2 via a bearing BR2 on an axial direction A1 side. Note that, in the present embodiment, as an example, the bearings BR1 and BR2 are in a form of ball bearing. However, the bearings BR1 and BR2 may be in another form.

The vehicular drive device 100 transmits output torque of the rotating electrical machine 1 to the pair of wheels W via the pair of output members 6 to cause the vehicle VC equipped with the vehicular drive device 100 to travel. That is, the rotating electrical machine 1 is a drive force of the pair of wheels W. The pair of wheels W is a pair of left and right wheels (for example, a pair of left and right front wheels or a pair of left and right rear wheels) in the vehicle VC. The rotating electrical machine 1 may be, for example, an alternating-current rotating electrical machine driven by three-phase alternating current power.

As shown in FIG. 2, the rotating electrical machine 1 and the pair of output members 6 are disposed separately on two axes (specifically, a first axis C1 and a second axis C2) parallel to each other. Specifically, the rotating electrical machine 1 is disposed on the first axis C1, and the pair of output members 6 is disposed on the second axis C2 different from the first axis C1. The first axis C1 and the second axis C2 are axes (virtual axes) arranged parallel to each other. The transmission mechanism 3 includes an output gear (ring gear) 30 drivingly coupled to at least one of the pair of output members 6, coaxially with the pair of output members 6 (that is, on the second axis C2).

The rotating electrical machine 1 is, for example, inner rotor type. In the rotating electrical machine 1, a rotor 14 that is rotatable about the first axis C1 is disposed radially inner side of a stator 11 (refer to FIG. 2).

The transmission mechanism 3 includes a deceleration mechanism 34 in a power transmission path between the rotating electrical machine 1 and an output gear 30. The deceleration mechanism 34 is arbitrary, and may include a deceleration mechanism using a counter gear, a deceleration mechanism using a planetary gear, and the like. In the present embodiment, as an example, the deceleration mechanism 34 includes a planetary gear mechanism, and the deceleration mechanism 34 is disposed coaxially with the rotating electrical machine 1. An output gear (carrier) 342 of the deceleration mechanism 34 meshes with the output gear 30 of a differential gear mechanism 5 in a radial direction. Such a vehicular drive device 100 can have a compact configuration including two axes (the first axis C1 and the second axis C2). Note that, in a modification, the vehicular drive device 100 may have three or more axes.

In the present embodiment, the deceleration mechanism 34 is disposed coaxially with the rotating electrical machine 1 (that is, on the first axis C1) in such a manner as to be drivingly coupled to the rotating electrical machine 1. In the present embodiment, as an example, the rotor 14 of the rotating electrical machine 1 rotates integrally with an input member 16 together with a sun gear 341 of the deceleration mechanism 34.

Furthermore, the transmission mechanism 3 further includes the differential gear mechanism 5. The differential gear mechanism 5 distributes the drive force transmitted from a rotating electrical machine 1 side to the pair of output members 6. In the example shown in FIG. 2, the differential gear mechanism 5 distributes rotation of the output gear 30 to a first side gear 51 and a second side gear 52. The differential gear mechanism 5 may be disposed coaxially with the pair of output members 6 (that is, on the second axis C2). Note that the differential gear mechanism 5 may be a bevel-gear type differential gear mechanism, and the output gear 30 may be coupled to a differential case part 50 so as to rotate integrally with the differential case part 50 included in the differential gear mechanism 5.

Next, a water-cooling structure of the rotating electrical machine 1 according to the present embodiment and components (a channel forming member 90 and the like) related thereto will be described with reference to FIG. 3 and subsequent drawings.

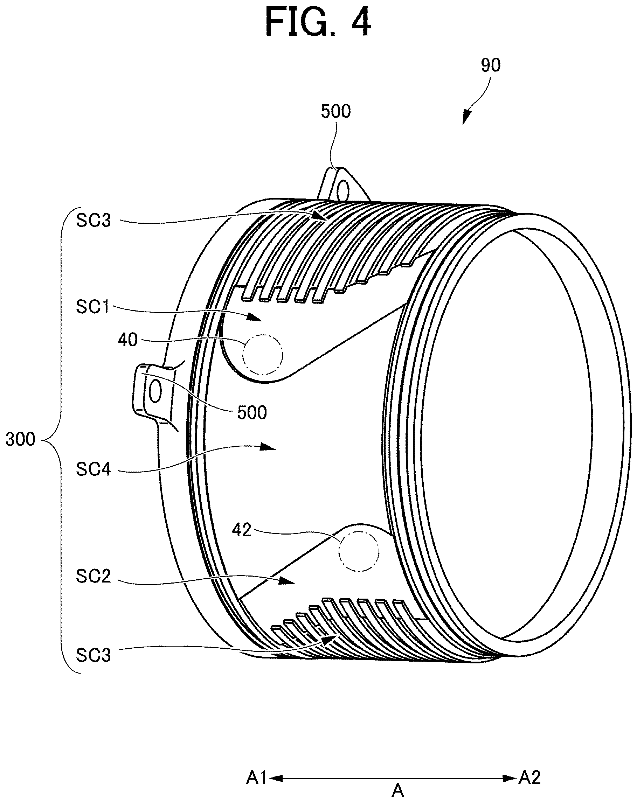

FIG. 3 is a side view schematically showing the vehicular drive device 100 according to the present embodiment. In FIG. 3, a motor cover member 201 is not shown so that a state of an inside of a motor housing chamber S1 can be seen. Furthermore, in FIG. 3, an inverter device 70 inside an inverter case part 24 is schematically shown by a dotted line. FIG. 4 is a perspective view of the channel forming member 90.

The water-cooling structure of the rotating electrical machine 1 according to the present embodiment is a structure for cooling the rotating electrical machine 1 with cooling water. Note that the cooling water may be, for example, water containing long life coolant: LLC, and may be circulated by a water pump (not shown). Note that a heat radiation unit such as a radiator (not shown) may be provided in the circulation path of the cooling water. Furthermore, the cooling water may be utilized not only for cooling the rotating electrical machine 1 but also for cooling another component, for example, an inverter (not shown) or the like electrically connected to the rotating electrical machine 1.

The water-cooling structure of the rotating electrical machine 1 according to the present embodiment includes a refrigerant supply unit 40, a refrigerant discharge unit 42, and a channel forming member 90.

The refrigerant supply unit 40 communicates with, for example, a discharge side of the water pump (not shown), and supplies the cooling water to the refrigerant channel 300 formed by the channel forming member 90.

The refrigerant discharge unit 42 communicates with, for example, a suction side of the water pump (not shown), and supplies (discharges) the cooling water from the refrigerant channel 300 formed by the channel forming member 90 to the water pump (not shown).

Note that the refrigerant supply unit 40 and the refrigerant discharge unit 42 may be provided on upper and lower sides with the first output member 61 interposed therebetween. In this case, the refrigerant supply unit 40 and the refrigerant discharge unit 42 can be established by effectively utilizing space around the first output member 61.

As shown in FIG. 4, the channel forming member 90 has a cylindrical shape having an inner peripheral surface radially facing an outer peripheral surface of the rotating electrical machine 1. The channel forming member 90 forms the refrigerant channel 300 around the rotating electrical machine 1. Note that, in the example shown in FIG. 4, the refrigerant channel 300 has a plurality of channel parts SC1 to SC4 in a circumferential direction, but the refrigerant channel 300 can be arbitrarily configured.

The channel forming member 90 may be formed of a material having good thermal conductivity, such as aluminum, for example In the present embodiment, as an example, the channel forming member 90 is fitted to a stator core 12 of the stator 11 by shrink-fitting, for example. Note that, in another embodiment, the channel forming member 90 may be integrally formed with the stator core 12 by casting or the like.

In the present embodiment, as an example, as shown in FIG. 3, the channel forming member 90 is in a form of the inner case fastened to the case 2. In this case, an axially one end side of the channel forming member 90 may have a plurality of fastening parts 500 as shown in FIG. 3. The plurality of fastening parts 500 are fastened to the case 2 by bolts (not shown) (refer to bolt holes BT4). Note that, in a modification, the channel forming member 90 may be formed as a part of the case 2.

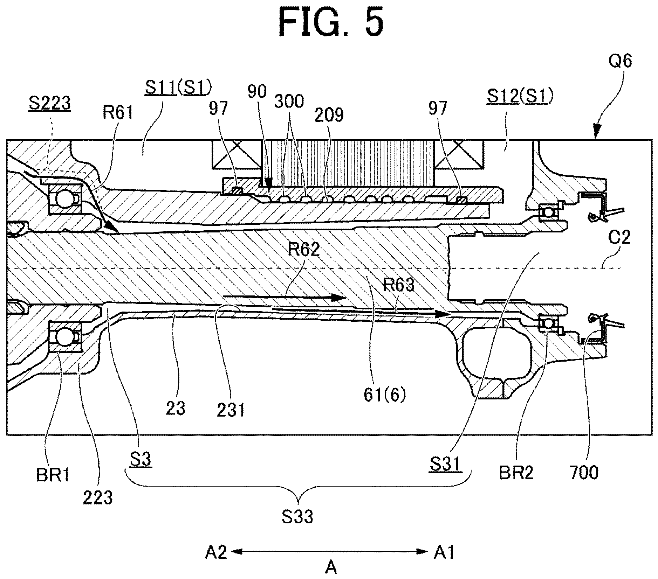

The channel forming member 90 is inserted into a space having a columnar shape in the case 2. At this time, an outer peripheral surface of the channel forming member 90 radially faces an inner peripheral surface (inner peripheral surface that bounds the plurality of fastening parts 500) of the case 2. Note that, hereinafter, an inner peripheral surface of the case 2 surrounding the channel forming member 90 in this manner is also referred to as a "channel forming surface 209 of the case 2" (refer to FIG. 5). Note that an inner diameter of the channel forming surface 209 of the case 2 may be a constant value larger by a base thickness of the channel forming member 90 than a base outer diameter of the stator core 12.

The channel forming member 90 cooperates with the channel forming surface 209 of the case 2 to form the refrigerant channel 300. Specifically, the refrigerant channel 300 is formed between the outer peripheral surface of the channel forming member 90 and the channel forming surface 209 of the case 2 in a radial direction.

The refrigerant channel 300 may extend in a circumferential direction such that the cooling water flows across the circumferential direction overall. Furthermore, the refrigerant channel 300 may be formed so as to radially face the outer peripheral surface of the stator core 12 across the axial direction overall of the stator core 12 of the rotating electrical machine 1. Note that the refrigerant channel 300 is closed at both axial ends. For example, between the channel forming member 90 and the channel forming surface 209 of the case 2, seal members 97 (refer to FIG. 5) may be provided over the entire circumferential direction at both axial end portions of the channel forming member 90.

Next, an oil passage structure of the vehicular drive device 100 according to the present embodiment and components related thereto will be described with reference to FIG. 5 and subsequent drawings. Each oil passage according to the oil passage structure described below is formed by the case 2 unless otherwise specified. In the present specification, various oil passages formed by the case 2 are a concept including not only an oil passage formed by the case 2 alone but also an oil passage formed by a combination of the case 2 and another component (component other than the case 2). Furthermore, a housing chamber such as an output shaft housing chamber S3 also constitutes an oil passage.

Here, first, a configuration of the case 2 will be described with reference to FIG. 2 and the like, and then the oil passage structure will be described with reference to FIG. 5 and subsequent drawings.

In the present embodiment, the case 2 includes a motor case part 21, a transmission mechanism case part 22, an output shaft case part 23, and an inverter case part 24 in an integrated form. Here, the "integrated form" includes an integrated form using a fastening member such as a bolt and an integrated form utilizing integral molding (for example, casting or pouring utilizing aluminizing or the like).

The motor case part 21 forms the motor housing chamber S1 that houses the rotating electrical machine 1, the transmission mechanism case part 22 forms a transmission mechanism housing chamber S2 that houses the transmission mechanism 3, the output shaft case part 23 forms the output shaft housing chamber S3 that houses the first output member 61, and the inverter case part 24 forms an inverter housing chamber S4 that houses the inverter device 70. Note that the motor case part 21 forming the motor housing chamber S1 means that a wall part that bounds the motor housing chamber S1 forms the motor case part 21. A similar applies to the transmission mechanism case part 22, the output shaft case part 23, and the inverter case part 24.

The motor case part 21 has a cylindrical shape corresponding to an outer shape of the rotating electrical machine 1. However, an entire cylindrical outer peripheral part of the motor case part 21 is not necessarily closed. For example, the motor housing chamber S1 and the output shaft housing chamber S3 may communicate with each other, and in this case, a wall part (partition wall part) may not be formed on a side of the motor case part 21, the side facing the output shaft housing chamber S3.

The transmission mechanism case part 22 is provided on the axial direction A2 side with respect to the motor case part 21 and the output shaft case part 23. The output shaft case part 23 is provided on the X2 side in the X direction with respect to the motor case part 21. The inverter case part 24 is provided on the upper side of the transmission mechanism case part 22 and the output shaft case part 23. Details of the inverter case part 24 will be described later.

In the present embodiment, the output shaft case part 23 is provided. Therefore, the first output member 61 can be effectively protected from an external environment (for example, a splashing stone or the like) as compared with a case where the first output member 61 is provided outside the case 2. Furthermore, clearance to be secured between the first output member 61 and peripheral components can be reduced. However, in a modification, the first output member 61 may be provided outside the case 2.

Note that the case 2 may be formed by joining a plurality of members (a case member and a cover member). Therefore, one case member forming the case 2 may form two or more case parts of the motor case part 21, the transmission mechanism case part 22, the output shaft case part 23, and the inverter case part 24.

Furthermore, the motor housing chamber S1, the transmission mechanism housing chamber S2, the output shaft housing chamber S3, and the inverter housing chamber S4 formed by the case 2 may be completely isolated from each other, may partially communicate with each other, or may be shared without borders. For example, the motor housing chamber S1 and the output shaft housing chamber S3 may be shared without a partition wall partitioning the motor housing chamber S1 and the output shaft housing chamber S3. In this case, the rotating electrical machine 1 and the first output member 61 are housed in a common housing chamber (specifically, the motor housing chamber S1 and the output shaft housing chamber S3) formed by the case 2. Furthermore, in a case where the rotating electrical machine 1 is oil-cooled type, the motor housing chamber S1 and the inverter housing chamber S4 may be partitioned, but in a case where the rotating electrical machine 1 is completely water-cooled type, the motor housing chamber S1 and the inverter housing chamber S4 may not be partitioned.

In the following description, as an example, the case 2 is formed by joining a case member 200, the motor cover member 201, a differential cover member 202, and an inverter cover member 203. Note that a joining method may be fastening with bolts or the like.

The case member 200 may be formed as one piece of member (for example, one member formed by a die-casting method and having a common material). **In** this case, the motor housing chamber S1 and the transmission mechanism housing chamber S2 may be partitioned by one partition wall 26.

The case member 200 is opened in the axial direction on the axial direction A1 side and opened in the axial direction on the axial direction A2 side.

The motor cover member 201 is provided so as to cover an opening on the axial direction A1 side in the case member 200 (that is, an opening on the axial direction A1 side in the motor housing chamber S1). The motor cover member 201 may be formed as one piece of member. The motor cover member 201 may be joined to an end surface (joint surface) on the axial direction A1 side of the case member 200. In this case, a joint surface (mating surface) 221 between the motor cover member 201 and the case member 200 may extend in a plane perpendicular to the axial direction.

The differential cover member 202 is provided so as to cover an opening on the axial direction A2 side in the case member 200 (that is, an opening on the axial direction A2 side in the transmission mechanism housing chamber S2). The differential cover member 202 may be formed as one piece of member. The differential cover member 202 may be joined to an end surface (joint surface) on the axial direction A2 side of the case member 200. In this case, a joint surface (mating surface) 222 between the differential cover member 202 and the case member 200 may extend in a plane perpendicular to the axial direction.

The inverter cover member 203 is provided so as to cover an opening of the inverter housing chamber S4 in the case member 200. The inverter cover member 203 may be formed as one piece of member.

The inverter device 70 may be in a form of a module, and may be fixed to a wall part forming the inverter case part 24 by bolts or the like. The inverter device 70 includes a plurality of switching elements (power semiconductor elements, not shown) that constitute an inverter circuit, a control board (not shown) on which a control device for controlling the inverter circuit is mounted, a smoothing capacitor, and the like.

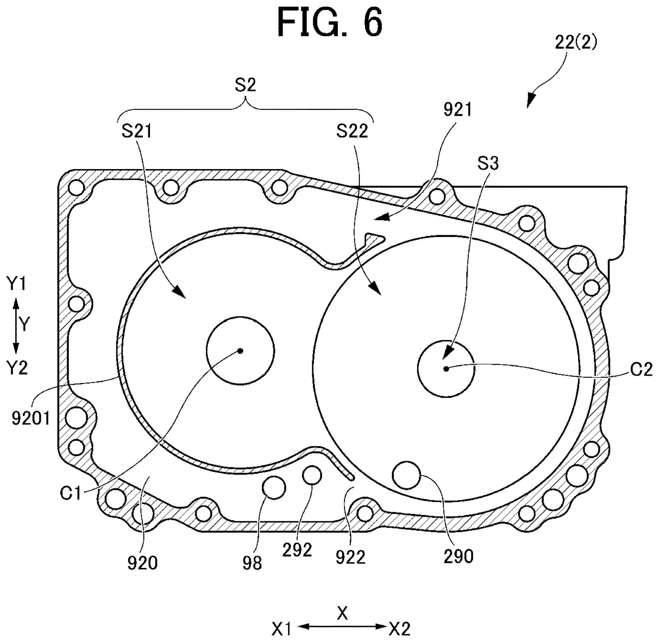

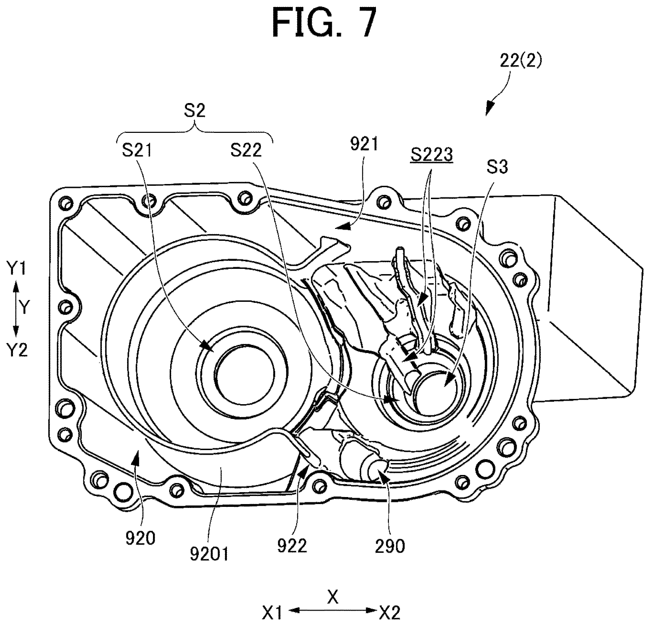

FIG. 5 is a cross-sectional view taken along a plane passing through the second axis C2 and the Y direction, and is an enlarged view of a portion Q6 in FIG. 2 (a cross-sectional view passing through the output shaft housing chamber S3). FIG. 6 is a side view from the A2 side, schematically showing the vehicular drive device 100 according to the present embodiment. FIG. 7 is a perspective view from the A2 side, schematically showing the vehicular drive device 100 according to the present embodiment. In FIGS. 6 and 7, the differential cover member 202 is not shown so that a state of an inside of the transmission mechanism housing chamber S2 can be seen.

Note that, as described above, the transmission mechanism housing chamber S2 and the output shaft housing chamber S3 overlap the second axis C2 as viewed from top and are adjacent to each other in the axial direction. Furthermore, because the transmission mechanism housing chamber S2 extends in the X direction in such a manner as to house the deceleration mechanism 34 and the differential gear mechanism 5, the transmission mechanism housing chamber S2 and the output shaft housing chamber S3 extend in an L shape as viewed from top. Hereinafter, of a transmission mechanism housing chamber S2, a part housing the deceleration mechanism 34 is also referred to as a "deceleration mechanism housing chamber S21", and a part housing the differential gear mechanism 5 is also referred to as a "differential gear housing chamber S22".

The output shaft case part 23 extends around the second axis C2 along an extending direction (that is, the axial direction) of the first output member 61. The output shaft case part 23 may be in a form of a peripheral wall part that forms a space S33 (space including the output shaft housing chamber S3) around the first output member 61. In this case, the space S33 around the first output member 61 (a space including the output shaft housing chamber S3) includes an annular space around the first output member 61 as viewed in an axial direction A. Note that, in this case, the output shaft case part 23 may extend radially outer side (X direction X2 side) of the rotating electrical machine 1, and may also form a part of the motor case part 21.

In the present embodiment, an axial direction A2 side of the output shaft housing chamber S3 communicates with the transmission mechanism housing chamber S2 (in particular, the differential gear housing chamber S22). Furthermore, an object to be lubricated by oil is disposed on the axial direction A1 side of the output shaft housing chamber S3. That is, an axially A1-side end portion of the output shaft housing chamber S3 communicates with a space S31 in which the object to be lubricated by the oil is disposed. The space S31 may be formed by the motor cover member 201. In this case, in the space S33 around the first output member 61, the output shaft housing chamber S3 and the space S31 are continuously formed in the axial direction. In the present embodiment, the object to be lubricated by the oil includes a bearing BR2 and an oil seal 700. The oil seal 700 is provided at an A1-side end portion of the first output member 61, and seals oil tightly between the first output member 61 and the case 2. Note that, in a modification, instead of the output shaft housing chamber S3 communicating with the space S31 in which the bearing BR2 and the oil seal 700 are disposed, the axially A1-side end portion of the output shaft housing chamber S3 may include the space S31 (space in which the bearing BR2 and the oil seal 700 are disposed). In this case, the space S33 around the first output member 61 includes the output shaft housing chamber S3.

In the present embodiment, the oil is circulated in the vehicular drive device 100 not by a so-called force-fed lubrication system utilizing an oil pump (mechanical or electric oil pump) but by a lubrication method (natural lubrication system) in which the oil is scraped up and lubricated by rotation of a gear. However, in a modification, the oil pump may be used for some of the lubrication.

Specifically, in the present embodiment, a lubrication system is adopted in which various objects to be lubricated are scraped up by rotation of the output gear 30 (so-called a differential ring) of the differential gear mechanism 5.

In this manner, according to the present embodiment, by adopting such a natural lubrication system in the vehicular drive device 100, oil pump is eliminated by which cost reduction and size reduction are achieved.

On the other hand, with the natural lubrication system, in order to appropriately supply the oil to the bearing BR2 and the oil seal 700 by the natural lubrication method, it is likely to be necessary to increase an oil level or to provide an additional component such as a catch tank. Note that, in order to increase the oil level, an amount of oil required increases, leading to an increase in cost.

Accordingly, in the present embodiment, axial direction A1 sides of a surface 231 (hereinafter, also referred to as "peripheral wall inner peripheral surface 231") of the output shaft case part 23 (refer to FIG. 5), the surface 231 facing the first output member 61, and an outer peripheral surface of the first output member 61 extend to a position lower than axial direction A2 sides thereof.

Specifically, the peripheral wall inner peripheral surface 231 includes a tilted surface that forms a height difference between the axial direction A1 side and the axial direction A2 side. Such a tilted surface may be implemented by increasing an inner diameter (inner diameter around the first axis C1) of the peripheral wall inner peripheral surface 231 toward the axial direction A1 side. However, in another embodiment, a step may be formed instead of or in addition to the tilted surface. In this case also, the step may be formed such that the inner diameter (inner diameter around the first axis C1) of the peripheral wall inner peripheral surface 231 gradually increases toward the axial direction A1 side.

Furthermore, similarly, the outer peripheral surface of the first output member 61 includes a tilted surface that forms a height difference between the axial direction A1 side and the axial direction A2 side. Such a tilted surface may be implemented by increasing an outer diameter (outer diameter around the first axis C1) of the outer peripheral surface of the first output member 61 toward the axial direction A1 side. In this case, the outer diameter of the outer peripheral surface of the first output member 61 may be smaller by a constant value than the inner diameter of the peripheral wall inner peripheral surface 231 at each position along the axial direction. However, in another embodiment, a step may be formed instead of or in addition to the tilted surface.

Such a peripheral wall inner peripheral surface 231 and an outer peripheral surface of the first output member 61 can have a function of causing oil supplied from the axial direction A2 side by the rotation of the output gear 30 of the differential gear mechanism 5 to flow toward the axial direction A1 side along the tilted surface at a relatively large flow rate by utilizing the action of gravity. Specifically, the oil (refer to the arrow R61 in FIG. 5) supplied from the axial direction A2 side by the rotation of the output gear 30 of the differential gear mechanism 5 falls on a surface of the first output member 61, and then flows to the axial direction A1 side along the surface of the first output member 61 (refer to the arrow R62 in FIG. 5). At this time, a flow of the oil toward the axial direction A1 side is promoted due to a tilt of the surface of the first output member 61. Furthermore, the oil (refer to the arrow R61 in FIG. 5) supplied from the axial direction A2 side by the rotation of the output gear 30 of the differential gear mechanism 5 falls on an upward-facing surface part of the peripheral wall inner peripheral surface 231 directly or via the surface of the first output member 61. Thereafter, the oil flows toward the axial direction A1 side along the upward-facing surface part of the peripheral wall inner peripheral surface 231 (refer to the arrow R63 in FIG. 5). At this time, the flow of the oil toward the axial direction A1 side is promoted due to a tilt of the peripheral wall inner peripheral surface 231. As a result, the oil can be supplied at an appropriate flow rate to an object to be lubricated (the bearing BR2 and the oil seal 700) provided at or in vicinity of the A1-side end portion of the first output member 61.

In this manner, according to the present embodiment, the oil scraped up by the rotation of the output gear 30 of the differential gear mechanism 5 can be appropriately supplied to the object to be lubricated (the bearing BR2 and the oil seal 700), without providing an additional component such as a catch tank. Therefore, it is possible to appropriately supply the oil to the object to be lubricated (the bearing BR2 and the oil seal 700) located at a position relatively far from the output gear 30 of the differential gear mechanism 5 in the axial direction while achieving miniaturization and cost reduction by the natural lubrication system.

Incidentally, in order to supply the oil to the object to be lubricated (the bearing BR2 and the oil seal 700) at an appropriate flow rate in this manner, it is useful to introduce the oil scraped up by the rotation of the output gear 30 of the differential gear mechanism 5, into the output shaft housing chamber S3 from the axial direction A2 side at an appropriate flow rate.

Accordingly, in the present embodiment, a portion of the transmission mechanism case part 22 has a cavity part S223. The portion is positioned on a border adjacent to the output shaft case part 23 in the axial direction (hereinafter, also referred to as a "bearing support part 223"). Note that the bearing support part 223 is a part positioned around the bearing BR1 and supports the bearing BR1. In this case, the cavity part S223 may be formed radially outer side the bearing BR1 and at a height at which oil scraped up by the rotation of the output gear 30 of the differential gear mechanism 5 is applied to the cavity part S223. Note that two or more cavity parts S223 may be provided around the bearing BR1, for example, at a top of the bearing BR1 in the up-down direction (12:00 position) and at a position lower than the top (for example, 11:00 position).

By providing such a cavity part S223, it is possible to introduce the oil scraped up by the rotation of the output gear 30 of the differential gear mechanism 5, from the axial direction A2 side into the output shaft housing chamber S3 at an appropriate flow rate. Furthermore, the oil scraped up by the rotation of the output gear 30 of the differential gear mechanism 5 can be directly introduced into the cavity part S223. Therefore, it is possible to introduce the oil into the output shaft housing chamber S3 from the axial direction A2 side at an appropriate flow rate without providing an additional component such as a catch tank.

In the present embodiment, the oil supplied to the motor housing chamber S1 and the output shaft housing chamber S3 (refer to FIGS. 2 and 5) and used for lubrication or the like is returned to the transmission mechanism housing chamber S2 (in particular, the differential gear housing chamber S22) via a return channel 290 (refer to FIG. 3) formed in the lower portion of the case 2.

Of the return channel 290, an A2-side end portion is opened to the differential gear housing chamber S22, and an A1-side end portion communicates with the output shaft housing chamber S3. The output shaft case part 23 may have an opening or a notch 99 (refer to FIG. 3) for ensuring communication between the output shaft housing chamber S3 and the return channel 290. Thus, the oil can be efficiently introduced from the output shaft housing chamber S3 into the return channel 290.

Next, a structure in the transmission mechanism housing chamber S2 of the oil passage structure will be mainly described with reference to FIG. 6.

In the present embodiment, because the natural lubrication system is adopted as described above, it is useful to relatively quickly return the oil used for lubrication of various objects to be lubricated, to a lower portion (an oil sump in which the output gear 30 is immersed) in the differential gear housing chamber S22. For example, in a case where a return channel such as the return channel 290 described above is opened to the deceleration mechanism housing chamber S21 other than the differential gear housing chamber S22 in the transmission mechanism housing chamber S2, the oil returning to the lower portion in the differential gear housing chamber S22 via the return channel tends to be insufficient. In this case, depending on a traveling state of the vehicle, an oil temperature sensor may not be immersed in the oil, and an internal air temperature may be measured. In order to eliminate such inconvenience, it is possible to increase an overall amount of the oil. In this case, however, there may be such problems as an increase in cost due to the increase in the oil amount, an increase in churning loss due to an increase in the oil level in a static state (churning loss by the output gear 30), and the like.

Accordingly, in the present embodiment, the return channel 290 is opened at a lower portion (below the second axis C2) of the differential gear housing chamber S22 of the transmission mechanism housing chamber S2. At this time, an axially A2-side end portion of the return channel 290 (opening on a differential gear housing chamber S22 side) preferably overlaps the output gear 30 as viewed in the axial direction. Thus, it is possible to relatively quickly return the oil used for lubrication of various objects to be lubricated, including the bearing BR2, the oil seal 700, and the like described above, to a lower portion (an oil sump in which the output gear 30 is immersed) in the differential gear housing chamber S22.

In the present embodiment, as described above, the channel forming member 90 is provided on the radially outer side of the rotating electrical machine 1. A radially inner side of the channel forming member 90 is fitted to the stator core 12, and a radially outer side of the channel forming member 90 is sealed on both sides in the axial direction with respect to the channel forming surface 209 of the case 2. That is, the channel forming member 90 is provided to partition a space S11 (refer to FIG. 2) in which a coil end 13 on the axial direction A2 side (in the present embodiment, a coil end 13 on a lead side) in the motor housing chamber S1 is positioned, and a space S12 (refer to FIG. 2) in which a coil end 13 on the axial direction A1 side in the motor housing chamber S1 is positioned. Therefore, the space S11 (refer to FIG. 2) in which the coil end 13 on the axial direction A2 side (in the present embodiment, the coil end 13 on the lead side) in the motor housing chamber S1 is positioned, and the space S12 (refer to FIG. 2) in which the coil end 13 on the axial direction A1 side in the motor housing chamber S1 is positioned do not substantially communicate with each other in the axial direction. Therefore, the oil ejected toward each coil end 13 through a shaft center oil passage 15a of a rotor shaft 15 and an ejection vent 15b in the radial direction of the rotor shaft 15 (oil ejected by centrifugal force during rotation of the rotor) cannot be returned to the transmission mechanism housing chamber S2 only through one return channel. Specifically, the oil jetted to the coil end 13 in the space S12 can return to the transmission mechanism housing chamber S2 (in particular, the differential gear housing chamber S22) through the return channel 290 described above, by communication between the space S12 and the output shaft housing chamber S3 (refer to FIG. 2). On the other hand, substantially, the oil jetted to the coil end 13 in the space S11 cannot return to the transmission mechanism housing chamber S2 (in particular, the differential gear housing chamber S22) through the return channel 290 described above.

Accordingly, in the present embodiment, a return channel 292 that allows the space S11 and the transmission mechanism housing chamber S2 to communicate with each other is provided as a second return channel. Specifically, of the return channel 292, an axially A1-side end portion communicates with the space S11 of the motor housing chamber S1, and an axially A2-side end portion communicates with a lower portion of the transmission mechanism housing chamber S2. In the present embodiment, the axially A2-side end portion of the return channel 292 is opened to a lower portion (below the first axis C1) of the deceleration mechanism housing chamber S21. At this time, the axially A2-side end portion of the return channel 292 (an opening on a deceleration mechanism housing chamber S21 side) is preferably opened at a position below the second axis C2. Thus, the oil used for cooling the coil end 13 in the space S11 as described above can be returned to the lower portion (the oil sump in which the output gear 30 is immersed) in the differential gear housing chamber S22 via the deceleration mechanism housing chamber S21. In other words, it is possible to efficiently return the oil supplied into the motor housing chamber S1 to the lower portion (the oil sump in which the output gear 30 is immersed) in the differential gear housing chamber S22, while implementing the water-cooling structure with the channel forming member 90, around the stator core 12.

Note that, in the present embodiment, the axially A2-side end portion of the return channel 292 (the opening on the deceleration mechanism housing chamber S21 side) is disposed in a catch tank 920 in the deceleration mechanism housing chamber S21.

As shown in FIG. 6, in the deceleration mechanism housing chamber S21, the catch tank 920 extends radially outer side of a wall part 9201 in the axial direction around the deceleration mechanism 34, and has an inlet 921 at a position where oil scraped up by the rotation of the output gear 30 can be caught. Then, the catch tank 920 has a discharge port 922 opened to the differential gear housing chamber S22 at a lower portion. In this case, an axially A2-side end portion of a return channel 292 (an opening on a deceleration mechanism housing chamber S21 side) may be provided in vicinity of the discharge port 922. Thus, the oil used for cooling the coil end 13 in the space S11 as described above can be relatively quickly returned to the lower portion (the oil sump in which the output gear 30 is immersed) in the differential gear housing chamber S22 via a lower portion of the catch tank 920. Note that the catch tank 920 may also communicate with a shaft center oil passage 15a of a rotor shaft 15 so as to supply oil to the shaft center oil passage 15a of the rotor shaft 15, and the like.

Note that, in a modification, the return channel 292 may be connected to the return channel 290 described above. For example, the return channel 292 may be formed as a channel through which the space S11 and the return channel 290 communicate with each other. In this case, a length of the return channel as a whole can be reduced, implementing an efficient return channel configuration.

An oil temperature sensor 98 (disposition thereof is schematically shown by a circle in FIG. 6) is provided at a lower portion of the catch tank 920. In this case, the oil temperature sensor 98 is provided in vicinity of the discharge port 922 of the catch tank 920. Thus, the oil temperature sensor 98 is less likely to be above an oil level depending on a traveling state of a vehicle, and therefore, reliability of sensor information from the oil temperature sensor 98 can be enhanced.

In this manner, in the present embodiment, as described above, the oil scraped up by the rotation of the output gear 30 of the differential gear mechanism 5 is introduced from the transmission mechanism housing chamber S2 to the output shaft housing chamber S3 via the cavity part S223 at a position upper than the second axis C2. Then, while flowing downward by gravity, the oil lubricates the bearing BR2 and the like. Then, the oil returns from the output shaft housing chamber S3 to the differential gear housing chamber S22 via an end portion ( axially A2-side end portion) of the return channel 290 at a position lower than the second axis C2. Thus, the rotation of the output gear 30 of the differential gear mechanism 5 can scrape up the oil again.

Furthermore, the oil scraped up by the rotation of the output gear 30 of the differential gear mechanism 5 is introduced into the shaft center oil passage 15a of the rotor shaft 15 via the catch tank 920, and is ejected from the ejection vent 15b to the coil end 13 of the rotating electrical machine 1 as described above. Then, the oil ejected to the coil end 13 in a space S12 of the motor housing chamber S1 is returned from the space S12 to the transmission mechanism housing chamber S2 via the end portion (axially A2-side end portion) of the return channel 290 at the position lower than the second axis C2. Furthermore, the oil ejected to the coil end 13 in a space S11 of the motor housing chamber S1 is returned from the space S11 to the transmission mechanism housing chamber S2 via the end portion (axially A2-side end portion) of the return channel 292 at the position lower than the second axis C2. The oil returned to the transmission mechanism housing chamber S2 in this manner is returned to the differential gear housing chamber S22 from the discharge port 922 below the second axis C2 in the catch tank 920. Thus, the rotation of the output gear 30 of the differential gear mechanism 5 can scrape up the oil again.

Although each embodiment has been described in detail above, the present invention is not limited to a specific embodiment, and various modifications and changes can be made within the scope described in the claims. Furthermore, all or a plurality of the components in the above-described embodiments can be combined.

For example, in the above-described embodiment, both the surface (peripheral wall inner peripheral surface 231) of the output shaft case part 23, the surface facing the first output member 61, and the outer peripheral surface of the first output member 61 have tilted surfaces. However, the present invention is not limited thereto. For example, only the peripheral wall inner peripheral surface 231 may have the tilted surface.

Furthermore, in the above-described embodiment, the output shaft case part 23 is in a form of a peripheral wall part surrounding the first output member 61 in at least a partial section in the axial direction of the first output member 61. However, the present invention is not limited thereto. For example, the output shaft case part 23 may face only a portion including a lower side around the first output member 61.

### REFERENCE SIGNS LIST

100: Vehicular drive device, 1: Rotating electrical machine (drive source), 2: Case, 22: Transmission mechanism case part (gear case part), 23: Output shaft case part (wall part, peripheral wall part), 231: Peripheral wall inner peripheral surface (surface of wall part), 290: Return channel (communication path), 34: Deceleration mechanism (transmission mechanism), 30: Output gear (ring gear), 5: Differential gear mechanism (transmission mechanism), 61: First output member (shaft member), 99: Opening or notch, BR1: Bearing (first bearing), BR2: Bearing (second bearing), S223: Cavity part, S31: Space (object disposition space), and W: Wheel

## Claims

1. A vehicular drive device comprising:
a transmission mechanism that transmits drive force from a drive source to a wheel via a shaft member; and
a case that houses the transmission mechanism and at least a portion of the shaft member, wherein
the case includes
a gear case part in which oil that is able to be scraped up by rotation of a gear of the transmission mechanism is accumulated, and
a wall part that bounds at least a lower side of a space around the shaft member and extends along an extending direction of the shaft member,
a space around the shaft member has one side in an extending direction of the shaft member communicating with an inside of the gear case part, and has another side in the extending direction of the shaft member including an object disposition space in which an object to be lubricated by oil is disposed, or communicating with the object disposition space, and
oil scraped up by rotation of a gear of the transmission mechanism is supplied to the object to be lubricated that is in a space around the shaft member, or to the object to be lubricated via a space around the shaft member.

2. The vehicular drive device according to claim 1, wherein a surface of the wall part, the surface facing a lower side of the shaft member, or an outer peripheral surface of the shaft member is lower in height on the another side of the shaft member in an extending direction than on the one side of the shaft member in the extending direction.

3. The vehicular drive device according to claim 2, wherein the surface of the wall part or the outer peripheral surface of the shaft member includes a tilted surface or step that forms a height difference between the another side and the one side.

4. The vehicular drive device according to claim 1, wherein
the one side of the shaft member in an extending direction is supported by the case via a first bearing, and
the case includes, on a radially outer side of the first bearing and above an axial center of the shaft member, a cavity part that allows a space around the shaft member and an inside of the gear case part to communicate with each other.

5. The vehicular drive device according to claim 1, wherein
the another side of the shaft member in an extending direction is supported by the case via a second bearing, and
the object to be lubricated includes the second bearing.

6. The vehicular drive device according to claim 1, wherein
the case includes a communication path for returning oil used for lubrication of the object to be lubricated, into an inside of the gear case part, and
the wall part includes a vent or notch that allows the object disposition space to communicate with the communication path.

7. The vehicular drive device according to claim 1, further comprising a rotating electrical machine that forms the drive source, wherein
the transmission mechanism includes a deceleration mechanism and a differential gear mechanism,
the case houses the rotating electrical machine, the deceleration mechanism, the differential gear mechanism, and the shaft member,
the gear is a ring gear of the differential gear mechanism, and
the wall part extends radially outer side of the rotating electrical machine.

8. The vehicular drive device according to any one of claims 1 to 6, wherein
the wall part has a form of a peripheral wall part that bounds a space around the shaft member over an entire circumference in at least a partial section in an extending direction of the shaft member, and
an inner diameter of the peripheral wall part and an outer diameter of the shaft member increase toward the one side to the another side in an extending direction of the shaft member.
